# EUROPEAN PATENT APPLICATION

(11) **EP 4 415 072 A1**
(43) Date of publication of application: **14.08.2024**
(21) Application number: 23781453.8
(22) Date of filing: 03.04.2023
(51) Int. Cl.: H01M 4/36, H01M 4/525, H01M 4/505, H01M 10/052, H01M 4/02

(54) **CATHODE ACTIVE MATERIAL, PREPARATION METHOD THEREFOR, AND LITHIUM SECONDARY BATTERY COMPRISING SAME**

(30) Priority: 01.04.2022 KR 20220041203
(71) Applicant: LG Chem, Ltd., Yeongdeungpo-gu Seoul 07336 (KR)
(72) Inventor: JEONG, Jin Hoo, Daejeon 34122 (KR); JEONG, Myung Gi, Daejeon 34122 (KR); JU, Jin Wook, Daejeon 34122 (KR); LEE, Eung Ju, Daejeon 34122 (KR); HWANG, Joo Kyoung, Daejeon 34122 (KR)
(74) Representative: Hoffmann Eitle
(86) International application number: PCT/KR2023/004474
(87) International publication number: WO 2023/191604

(57) **Abstract**

The present invention relates to a positive electrode active material, wherein it relates to a positive electrode active material including a lithium composite transition metal oxide in a form of a single particle; and a coating portion containing cobalt which is formed on the lithium composite transition metal oxide in the form of a single particle, wherein the coating portion containing cobalt has a phase gradient from a spinel structure to a layered structure in a central direction from a surface of the positive electrode active material, a preparation method thereof, and a lithium secondary battery including the positive electrode active material.

## Description

### TECHNICAL FIELD

### Cross-reference to Related Applications

This application claims priority from Korean Patent Application No. 10-2022-0041203, filed on April 1, 2022, the disclosure of which is incorporated by reference herein.

### Technical Field

The present invention relates to a positive electrode active material including a high-nickel (high-Ni)-based lithium composite transition metal oxide in a form of a single particle, in which initial resistance characteristics of a lithium secondary battery are improved and a side reaction with an electrolyte solution may be prevented to suppress a gas generation amount by introducing a coating portion containing cobalt which has a phase gradient, a preparation method thereof, and a lithium secondary battery including the positive electrode active material.

### BACKGROUND ART

With the recent technological development of electric vehicles, demand for high-capacity secondary batteries is increasing, and, accordingly, research on a high-nickel (high-Ni)-based positive electrode active material having excellent capacity characteristics is being actively conducted.

However, in a case in which a nickel content of the positive electrode active material is high, problems, such as capacity reduction and resistance, occur as battery cycles proceed, and research on various coating materials is being conducted to solve these problems.

If cobalt, one of representative coating materials, is coated on a surface of the high-nickel (high-Ni)-based positive electrode active material, a coating layer containing cobalt is formed on the surface, wherein, since the coating layer containing cobalt is formed in a layered structure when using a conventional coating method, deintercalation of lithium from the positive electrode active material is easy, and thus, there is a problem of increasing viscosity of a slurry for forming a positive electrode and there is a problem of increasing initial resistance of a battery or a problem of increasing a gas generation amount of the battery.

### DISCLOSURE OF THE INVENTION

### TECHNICAL PROBLEM

An aspect of the present invention provides a positive electrode active material including a high-nickel (high-Ni)-based lithium composite transition metal oxide in a form of a single particle, wherein initial resistance characteristics of a lithium secondary battery are improved and a side reaction with an electrolyte solution may be prevented to suppress a gas generation amount.

Another aspect of the present invention provides a method of preparing the positive electrode active material which may introduce a coating portion containing cobalt and having a phase gradient.

Another aspect of the present invention provides a lithium secondary battery in which initial resistance is reduced and storage characteristics are improved by including the positive electrode active material.

### TECHNICAL SOLUTION

In order to solve the above-described tasks, the present invention provides a positive electrode active material, a method of preparing a positive electrode active material, a positive electrode, and a lithium secondary battery.
(1) The present invention provides a positive electrode active material including a lithium composite transition metal oxide in a form of a single particle; and a coating portion containing cobalt which is formed on the lithium composite transition metal oxide in the form of a single particle, wherein the coating portion containing cobalt has a phase gradient from a spinel structure to a layered structure in a central direction from a surface of the positive electrode active material.
(2) The present invention provides the positive electrode active material of (1) above, wherein the lithium composite transition metal oxide in the form of a single particle includes 60 mol% or more of nickel based on the total number of moles of metals excluding lithium.
(3) The present invention provides the positive electrode active material of (1) or (2) above, wherein the lithium composite transition metal oxide in the form of a single particle has a composition represented by Formula 1:

   [Formula 1] Liₓ[Ni_{aC}o_{b}Mn_{c}M1_{d}]O_{2-y}A_{y}

   wherein, in Formula 1,
   M1 is at least one selected from yttrium (Y), zirconium (Zr), aluminum (Al), boron (B), titanium (Ti), tungsten (W), niobium (Nb), strontium (Sr), molybdenum (Mo), and magnesium (Mg),
   A is at least one selected from fluorine (F), chlorine (Cl), bromine (Br), iodine (I), and sulfur (S), and
   0.9≤x≤1.2, 0.6≤a<1, 0≤b≤0.4, 0≤c≤0.4, 0≤d≤0.2, a+b+c+d=1, and 0≤y≤0.2.
(4) The present invention provides the positive electrode active material of any one of (1) to (3) above, wherein the coating portion containing cobalt is locally present on the surface of the positive electrode active material.
(5) The present invention provides the positive electrode active material of any one of (1) to (4) above, wherein the coating portion containing cobalt sequentially has the phase gradient of the spinel structure of Co₃O₄, the spinel structure of Li_{0.5}CoO₂, and the layered structure of LiCoO₂ in the central direction from the surface of the positive electrode active material.
(6) The present invention provides the positive electrode active material of any one of (1) to (5) above, wherein the coating portion containing cobalt further includes aluminum.
(7) The present invention provides a method of preparing a positive electrode active material which includes steps of: preparing a mixture including a lithium composite transition metal oxide in a form of a single particle and a cobalt oxide having an average particle diameter (D₅₀) of 50 nm to 1,000 nm; and performing a heat treatment on the mixture.
(8) The present invention provides the method of preparing a positive electrode active material of (7) above, wherein the mixture includes the cobalt oxide in an amount such that a ratio (B/A) of the number of moles (B) of cobalt contained in the cobalt oxide to the total number of moles (A) of metals excluding lithium, which are included in the lithium composite transition metal oxide, is in a range of 0.1 to 5.
(9) The present invention provides the method of preparing a positive electrode active material of (7) or (8) above, wherein the mixture further includes an aluminum raw material.
(10) The present invention provides the method of preparing a positive electrode active material of (9) above, wherein the mixture includes the aluminum raw material in an amount of 0.01 part by weight to 0.1 part by weight based on 100 parts by weight of the lithium composite transition metal oxide.
(11) The present invention provides the method of preparing a positive electrode active material of any one of (7) to (10) above, wherein the heat treatment is performed in an oxygen atmosphere.
(12) The present invention provides the method of preparing a positive electrode active material of any one of (7) to (11) above, wherein the heat treatment is performed at a temperature of 600°C to 800°C.
(13) The present invention provides the method of preparing a positive electrode active material of any one of (7) to (12) above, wherein the heat treatment is performed for 1 hour to 8 hours.
(14) The present invention provides a positive electrode including the positive electrode active material of any one of (1) to (6) above.
(15) The present invention provides a lithium secondary battery including the positive electrode of (14) above, a negative electrode, a separator disposed between the positive electrode and the negative electrode, and an electrolyte.

### ADVANTAGEOUS EFFECTS

Since a positive electrode active material of the present invention includes a high-nickel (high-Ni)-based lithium composite transition metal oxide in a form of a single particle and has a coating portion which contains cobalt and has a phase gradient from a spinel structure to a layered structure in a central direction from a surface of the positive electrode active material, initial resistance characteristics of a lithium secondary battery may be improved and a gas generation amount may be minimized.

Also, according to a method of preparing a positive electrode active material of the present invention, the coating portion containing cobalt and having the phase gradient may be effectively introduced.

### BRIEF DESCRIPTION OF THE DRAWINGS

FIG. 1 is EPMA (Electron Probe X-ray Micro Analyzer) data of a positive electrode active material of Example 1.
FIG. 2 is TEM (Transmission Electron Microscope) images of the positive electrode active material of Example 1.
FIG. 3 is TEM images of a positive electrode active material of Comparative Example 1.
FIG. 4 is an SEM (Scanning Electron Microscope) image of a lithium composite transition metal oxide in the form of a single particle which is used in Examples and Comparative Examples.
FIG. 5 is an SEM image of the positive electrode active material of Example 1.
FIG. 6 is an SEM image of a positive electrode active material of Example 2.
FIG. 7 is an SEM image of the positive electrode active material of Comparative Example 1.
FIG. 8 is an SEM image of a positive electrode active material of Comparative Example 2.

### MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms 'include,' 'comprise,' or 'have' in this specification specify the presence of stated features, numbers, steps, elements, or combinations thereof, but do not preclude the presence or addition of one or more other features, numbers, steps, elements, or combinations thereof.

The term 'on' in the present specification means not only a case in which one component is formed directly on an upper surface of another component, but also includes a case in which intervening components may also be present.

In the present specification, the expression 'positive electrode active material in a form of a single particle' is a concept in contrast to a positive electrode active material in a form of a spherical secondary particle formed by aggregation of tens to hundreds of primary particles which is prepared by a conventional method, wherein it means a positive electrode active material composed of 10 or less primary particles. Specifically, in the present invention, the positive electrode active material in the form of a single particle may be a single particle composed of one primary particle, or may be in the form of a secondary particle in which several primary particles are aggregated.

The expression 'primary particle' denotes the smallest unit of particles recognized when a positive electrode active material is observed through a scanning electron microscope, and the expression 'secondary particle' denotes a secondary structure formed by aggregation of a plurality of the primary particles.

In the present specification, the expression 'average particle diameter (D₅₀)' denotes a particle diameter at 50% of cumulative distribution of volume according to the particle diameter. After dispersing measurement target powder in a dispersion medium, the dispersion medium is introduced into a commercial laser diffraction particle size measurement instrument (e.g., Microtrac S3500), a particle size distribution is calculated by measuring a difference in diffraction patterns due to a particle size when particles pass through a laser beam, and the D₅₀ may be measured by calculating a particle diameter at 50% of the cumulative distribution of volume according to the particle diameter using the measurement instrument.

### Positive Electrode Active Material

The present invention provides a positive electrode active material including a lithium composite transition metal oxide in a form of a single particle; and a coating portion containing cobalt which is formed on the lithium composite transition metal oxide in the form of a single particle, wherein the coating portion containing cobalt has a phase gradient from a spinel structure to a layered structure in a central direction from a surface of the positive electrode active material.

The inventors of the present invention have found that, in a case in which a coating portion having a phase gradient is formed on the lithium composite transition metal oxide in the form of a single particle, specifically, in a case in which the coating portion containing cobalt, which has a phase gradient from a spinel structure to a layered structure in the central direction from the surface of the positive electrode active material, is formed, electrical conductivity is not only increased, but deintercalation of lithium present in the positive electrode active material is also prevented to improve initial resistance characteristics and storage characteristics (particularly, high-temperature storage characteristics) of a lithium secondary battery, thereby leading to the completion of the present invention.

In this specification, the phase gradient means that a crystal lattice structure, such as a layered structure and a spinel structure, is changed. Specifically, the phase gradient may mean that the crystal lattice structure is gradually changed as a composition of the coating portion is changed. For example, it may mean that, when the composition of the coating portion is LiₓCoO₂, the crystal lattice structure is gradually changed as a value of x is gradually changed from 1 to 0.5.

According to the present invention, the lithium composite transition metal oxide in the form of a single particle may include 60 mol% or more, specifically 80 mol% or more, and more specifically 85 mol% or more of nickel based on the total number of moles of metals excluding lithium. That is, the lithium composite transition metal oxide in the form of a single particle may be a high-nickel (high-Ni) -based lithium composite transition metal oxide. In this case, energy density of the lithium secondary battery may be improved.

According to the present invention, the lithium composite transition metal oxide in the form of a single particle may have a composition represented by the following Formula 1.

[Formula 1] Liₓ[Ni_{aC}o_{b}Mn_{c}M1_{d}]O_{2-y}A_{y}

In Formula 1,
M1 is at least one selected from yttrium (Y), zirconium (Zr), aluminum (Al), boron (B), titanium (Ti), tungsten (W), niobium (Nb), strontium (Sr), molybdenum (Mo), and magnesium (Mg),
A is at least one selected from fluorine (F), chlorine (Cl), bromine (Br), iodine (I), and sulfur (S), and
0.9≤x≤1.2, 0.6≤a<1, 0≤b≤0.4, 0≤c≤0.4, 0≤d≤0.2, a+b+c+d=1, and 0≤y≤0.2.
M1 may specifically be at least one selected from Y, Zr, and Al.
a represents an atomic fraction of nickel among metallic elements in the lithium composite transition metal oxide, wherein a may satisfy 0.6≤a<1, 0.8≤a≤0.98, or 0.85≤a≤0.95.
b represents an atomic fraction of cobalt among the metallic elements in the lithium composite transition metal oxide, wherein b may satisfy 0≤b≤0.4, 0.01≤b≤0.2, or 0.01≤b≤0.15.
c represents an atomic fraction of manganese among the metallic elements in the lithium composite transition metal oxide, wherein c may satisfy 0≤b≤0.4, 0.01≤b≤0.2, or 0.01≤b≤0.15.
d represents an atomic fraction of a M1 element among the metallic elements in the lithium composite transition metal oxide, wherein d may satisfy 0≤d≤0.2, 0≤d≤0.1, or 0≤d≤0.05.

The lithium composite transition metal oxide in the form of a single particle may have an average particle diameter (D₅₀) of 1 um to 10 um, specifically 1 um to 7 µm, and more specifically 1 um to 5 µm.

According to the present invention, the coating portion containing cobalt may be locally present on the surface of the positive electrode active material in terms of improving lithium ion conductivity. That is, the coating portion may not cover an entire surface of the lithium composite transition metal oxide in the form of a single particle. In this case, the coating portion may have a dot shape. The coating portion may not be present on a grain boundary.

According to the present invention, the coating portion containing cobalt has a phase gradient from a spinel structure to a layered structure in a central direction from the surface of the positive electrode active material. In this case, since the electrical conductivity is not only increased, but the deintercalation of the lithium present in the positive electrode active material is also prevented, the initial resistance characteristics and the high-temperature storage characteristics of the lithium secondary battery may be improved.

According to the present invention, the coating portion containing cobalt may sequentially have a phase gradient of a spinel structure of Co₃O₄, a spinel structure of Li_{0.5}CoO₂, and a layered structure of LiCoO₂ in the central direction from the surface of the positive electrode active material. In this case, since the spinel structure of Co₃O₄ and the spinel structure of Li_{0.5}CoO₂ not only have excellent electrical conductivity, but the spinel structure of Li_{0.5}CoO₂ also has high lithium ion conductivity, initial resistance of a battery, in which the positive electrode active material is used, may be further reduced. Also, since the spinel structure of Co₃O₄, which is a structure in which lithium may not move, may be present in the outermost portion to further prevent the deintercalation of the lithium from the positive electrode active material, storage characteristics of the battery, in which the positive electrode active material is used, may be further improved.

According to the present invention, the coating portion containing cobalt may further include aluminum. In this case, since the lithium ion conductivity of the coating portion may be improved, initial resistance characteristics and storage characteristics of a battery may be more excellent when the positive electrode active material is used in the battery. In this case, the coating portion containing cobalt and aluminum may have a dot shape while being locally present on the surface of the positive electrode active material.

The aluminum may be included in an amount of 100 ppm to 1,000 ppm, 200 ppm to 700 ppm, or 400 ppm to 600 ppm based on the lithium composite transition metal oxide. In this case, since the dot-shaped coating portion is distributed in appropriate size and amount, electrochemical characteristics of a battery may be improved when the positive electrode active material is used in the battery.

### Method of Preparing Positive Electrode Active Material

The present invention provides a method of preparing a positive electrode active material which includes the steps of: preparing a mixture including a lithium composite transition metal oxide in a form of a single particle and a cobalt oxide having an average particle diameter (D₅₀) of 50 nm to 1,000 nm; and performing a heat treatment on the mixture.

The above-described positive electrode active material according to the present invention is prepared by the method of preparing a positive electrode active material according to the present invention. That is, in a case in which the mixture including the lithium composite transition metal oxide in the form of a single particle and the cobalt oxide having an average particle diameter (D₅₀) of 50 nm to 1,000 nm is prepared and the mixture is heat-treated, a coating portion containing cobalt is formed on the lithium composite transition metal oxide in the form of a single particle, and the coating portion containing cobalt has a phase gradient (specifically, a phase gradient from a spinel structure to a layered structure in a central direction from the surface of the positive electrode active material).

As in the present invention, in a case in which the cobalt oxide having an average particle diameter (D₅₀) of 50 nm to 1,000 nm is used as a raw material, the coating portion containing cobalt, which has the phase gradient from the spinel structure to the layered structure in the central direction from the surface of the positive electrode active material, may be formed. In contrast, in a case in which a cobalt oxide having an average particle diameter (D₅₀) of less than 50 nm is used as a raw material of the coating portion, the coating portion is not formed due to excessively fast diffusion and there is a problem in that the cobalt is diffused into the lithium composite transition metal oxide, and, in a case in which a cobalt oxide having an average particle diameter (D₅₀) of greater than 1,000 nm is used as a raw material of the coating portion, there is a problem in that the cobalt oxide remains in an aggregated state.

According to the present invention, the cobalt oxide may have an average particle diameter (D₅₀) of 50 nm to 1,000 nm, specifically 50 nm to 300 nm, and more specifically 50 nm to 200 nm. In this case, the coating portion may not be formed on a grain boundary, but may be locally formed on the surface of the positive electrode active material.

The cobalt oxide may be at least one selected from Co₃O₄, Co₂O₃, and CoO, and may specifically be Co₃O₄.

According to the present invention, the mixture may include the cobalt oxide in an amount such that a ratio (B/A) of the number of moles (B) of cobalt contained in the cobalt oxide to the total number of moles (A) of metals excluding lithium, which are included in the lithium composite transition metal oxide, is in a range of 0.1 to 5, specifically 0.5 to 4, and more specifically 1 to 2.5. In this case, since the formed coating portion may be controlled to have a desired phase or shape, resistance characteristics and high-temperature storage characteristics of a battery including the positive electrode active material thus prepared may be further improved.

According to the present invention, the mixture may further include an aluminum raw material. In this case, aluminum may more finely control the shape of the coating portion, may eliminate cation mixing, and may improve the lithium ion conductivity. As a result, since structural stability and lithium ion conductivity of the prepared positive electrode active material are improved, initial resistance characteristics and storage characteristics of a battery may be further improved when the positive electrode active material is used in the battery. For reference, in the case that the mixture further includes the aluminum raw material, more dot-shaped coating portions may be formed.

According to the present invention, the mixture may include the aluminum raw material in an amount of 0.01 part by weight to 0.1 part by weight, specifically 0.02 part by weight to 0.07 part by weight, and more specifically 0.04 part by weight to 0.06 part by weight based on 100 parts by weight of the lithium composite transition metal oxide. In this case, since the dot-shaped coating portion may be distributed in appropriate size and amount and the structural stability of the prepared positive electrode active material may be improved, resistance characteristics and high-temperature storage stability of a battery may be further improved when the positive electrode active material is used in the battery.

The aluminum raw material may be at least one selected from Al(OH)₂, Al₂O₃, AlCl₃, Al(NO)₃, and AlSO₄, may specifically be at least one selected from Al(OH)₂, Al₂O₃, and Al(NO)₃, and may more specifically be Al(OH)₂.

According to the present invention, the heat treatment may be performed in an oxygen atmosphere to prevent degradation of the lithium transition metal oxide into a rock salt structure.

According to the present invention, the heat treatment may be performed at a temperature of 600°C to 800°C, specifically 650°C to 750°C, and more specifically 680°C to 730°C, in order to form a coating portion having a desired phase.

According to the present invention, the heat treatment may be performed for 1 hour to 10 hours, specifically 2 hours to 8 hours, and more specifically 3 hours to 6 hours, in terms of controlling interdiffusion of the lithium transition metal oxide and the coating portion.

### Positive Electrode

The present invention provides a positive electrode including the positive electrode active material.

According to an embodiment of the present invention, the positive electrode may include a positive electrode collector and a positive electrode active material layer formed on the positive electrode collector, wherein the positive electrode active material layer may include the above positive electrode active material.

According to an embodiment of the present invention, the positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

According to an embodiment of the present invention, the positive electrode active material layer may optionally include a conductive agent and a binder in addition to the positive electrode active material, if necessary. In this case, the positive electrode active material may be included in an amount of 80 wt% to 99 wt%, more specifically, 85 wt% to 98.5 wt% based on a total weight of the positive electrode active material layer, and excellent capacity characteristics may be obtained within this range.

According to an embodiment of the present invention, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

According to an embodiment of the present invention, the binder improves the adhesion between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

According to an embodiment of the present invention, the positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is coated on the positive electrode collector, and the positive electrode may then be prepared by drying and rolling the coated positive electrode collector, or the positive electrode may be prepared by casting the composition for forming a positive electrode active material layer on a separate support and then laminating a film separated from the support on the positive electrode collector.

According to an embodiment of the present invention, the solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of a slurry and manufacturing yield, and may allow to have a viscosity that may provide excellent thickness uniformity during the subsequent coating for the preparation of the positive electrode.

### Lithium Secondary Battery

The present invention provides a lithium secondary battery including the positive electrode.

According to an embodiment of the present invention, the lithium secondary battery may include the positive electrode; a negative electrode; a separator disposed between the positive electrode and the negative electrode, and an electrolyte. Also, the lithium secondary battery may further optionally include a battery container accommodating an electrode assembly of the positive electrode, the negative electrode, and the separator, and a sealing member sealing the battery container.

According to an embodiment of the present invention, the negative electrode may include a negative electrode collector and a negative electrode active material layer disposed on the negative electrode collector.

According to an embodiment of the present invention, the negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

According to an embodiment of the present invention, the negative electrode active material layer may optionally include a binder and a conductive agent in addition to the negative electrode active material.

According to an embodiment of the present invention, a compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiOp(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes. The negative electrode active material may be included in an amount of 80 wt% to 99 wt% based on a total weight of the negative electrode active material layer.

According to an embodiment of the present invention, the binder of the negative electrode active material layer is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

According to an embodiment of the present invention, the conductive agent of the negative electrode active material layer is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

According to an embodiment of the present invention, the negative electrode may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

According to an embodiment of the present invention, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

According to an embodiment of the present invention, the electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto. As a specific example, the electrolyte may include an organic solvent and a lithium salt.

According to an embodiment of the present invention, any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

According to an embodiment of the present invention, the lithium salt may be used without particular limitation as long as it is a compound capable of providing lithium ions used in the lithium secondary battery. Specifically, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N-, and LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

According to an embodiment of the present invention, in order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 5 wt% based on a total weight of the electrolyte.

Since the lithium secondary battery including the positive electrode active material according to the present invention stably exhibits excellent capacity characteristics, output characteristics, and life characteristics, the lithium secondary battery is suitable for portable devices, such as mobile phones, notebook computers, and digital cameras, and electric cars such as hybrid electric vehicles (HEVs) and electric vehicles (EVs).

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Thus, according to an embodiment of the present invention, a battery module including the lithium secondary battery as a unit cell and a battery pack including the battery module are provided.

According to an embodiment of the present invention, the battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Examples

### Example 1

A mixture was prepared by uniformly mixing a lithium composite transition metal oxide (composition: LiNi_{0.86}Co_{0.05}Mn_{0.09}O₂; average particle diameter (D₅₀) : 4 µm) (manufactured by LG Chem) in a form of a single particle and a cobalt oxide (Co₃O₄) having an average particle diameter (D₅₀) of 200 nm in amounts such that a ratio of the number of moles of cobalt contained in the cobalt oxide to the total number of moles of metals excluding lithium, which were contained in the lithium composite transition metal oxide, was 2. The mixture was heat-treated at a temperature of 680°C for 5 hours in an oxygen atmosphere to prepare a positive electrode active material in which a coating portion containing cobalt was formed on the lithium composite transition metal oxide in the form of a single particle.

### Example 2

A mixture was prepared by uniformly mixing a lithium composite transition metal oxide (composition: LiNi_{0.86}Co_{0.05}Mn_{0.09}O₂; average particle diameter (D₅₀) : 4 µm) (manufactured by LG Chem) in a form of a single particle, a cobalt oxide (Co₃O₄) having an average particle diameter (D₅₀) of 200 nm, and an aluminum hydroxide (Al(OH)₂) (KC Corporation) (The cobalt oxide was mixed in an amount such that a ratio of the number of moles of cobalt contained in the cobalt oxide to the total number of moles of metals excluding lithium, which were contained in the lithium composite transition metal oxide, was 2, and the aluminum hydroxide was mixed in an amount of 0.05 part by weight based on 100 parts by weight of the lithium composite transition metal oxide). The mixture was heat-treated at a temperature of 700°C for 5 hours in an oxygen atmosphere to prepare a positive electrode active material in which a coating portion containing cobalt and aluminum was formed on the lithium composite transition metal oxide in the form of a single particle.

### Comparative Example 1

A mixture was prepared by uniformly mixing a lithium composite transition metal oxide (composition: LiNi_{0.86}Co_{0.05}Mn_{0.09}O₂; average particle diameter (D₅₀) : 4 µm) (manufactured by LG Chem) in a form of a single particle and a cobalt hydroxide (Co(OH)₂) (Huayou Cobalt) in amounts such that a ratio of the number of moles of cobalt contained in the cobalt hydroxide to the total number of moles of metals excluding lithium, which were contained in the lithium composite transition metal oxide, was 2. The mixture was heat-treated at a temperature of 680°C for 5 hours in an oxygen atmosphere to prepare a positive electrode active material in which a coating layer containing cobalt was formed on the lithium composite transition metal oxide in the form of a single particle.

### Comparative Example 2

A mixture was prepared by uniformly mixing a lithium composite transition metal oxide (composition: LiNi_{0.86}Co_{0.05}Mn_{0.09}O₂; average particle diameter (D₅₀) : 4 µm) (manufactured by LG Chem) in a form of a single particle, a cobalt hydroxide (Co(OH)₂) (Huayou Cobalt), and an aluminum hydroxide (Al(OH)₂) (KC Corporation) (The cobalt hydroxide was mixed in an amount such that a ratio of the number of moles of cobalt contained in the cobalt hydroxide to the total number of moles of metals excluding lithium, which were contained in the lithium composite transition metal oxide, was 2, and the aluminum hydroxide was mixed in an amount of 0.05 part by weight based on 100 parts by weight of the lithium composite transition metal oxide). The mixture was heat-treated at a temperature of 700°C for 5 hours in an oxygen atmosphere to prepare a positive electrode active material in which a coating layer containing cobalt and aluminum was formed on the lithium composite transition metal oxide in the form of a single particle.

### Comparative Example 3

A positive electrode active material was prepared in the same manner as in Example 2 except that a cobalt oxide (Co₃O₄) having an average particle diameter (D₅₀) of 30 nm was used instead of the cobalt oxide (Co₃O₄) having an average particle diameter (D₅₀) of 200 nm.

### Comparative Example 4

A positive electrode active material was prepared in the same manner as in Example 2 except that a cobalt oxide (Co₃O₄) having an average particle diameter (D₅₀) of 1.5 um was used instead of the cobalt oxide (Co₃O₄) having an average particle diameter (D₅₀) of 200 nm.

### Experimental Examples

### Experimental Example 1: Positive Electrode Active Material Analysis

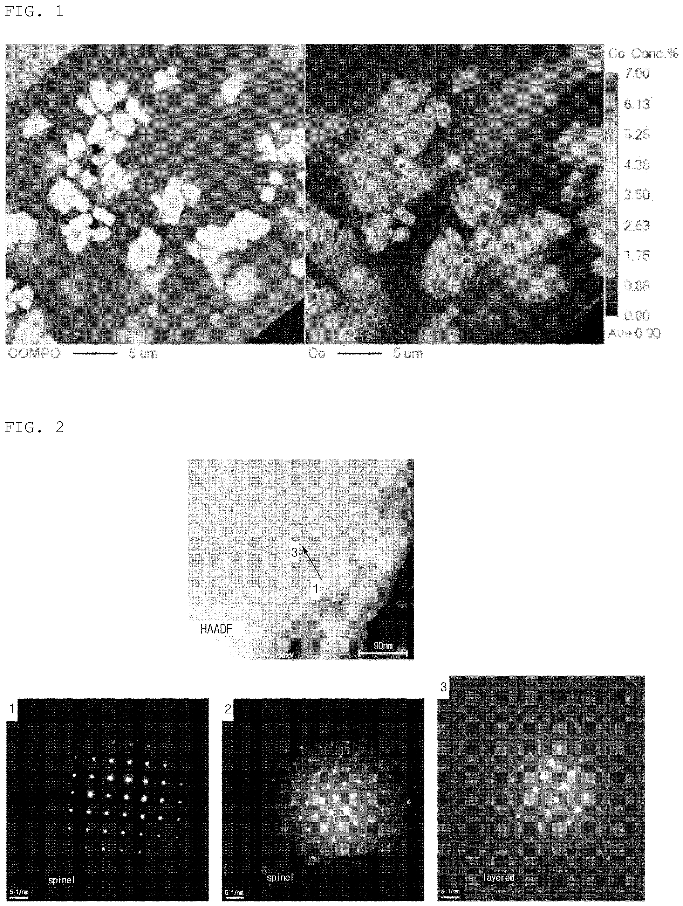

In order to confirm how the coating portion containing cobalt was formed on a surface of the positive electrode active material prepared in Example 1, analysis was performed using an electron probe X-ray micro analyzer (EPMA), and EPMA data are illustrated in FIG. 1.

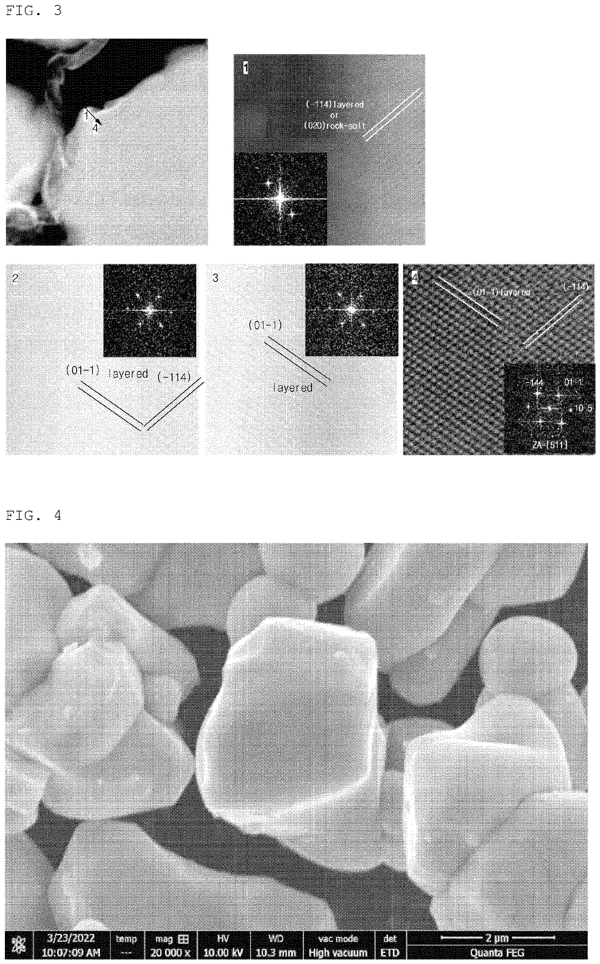

In addition, the coating portion or coating layer of each of the positive electrode active materials prepared in Example 1 and Comparative Example 1 was observed using a transmission electron microscope (TEM), TEM images of Example 1 are illustrated in FIG. 2, and TEM images of Comparative Example 1 are illustrated in Figure 3.

Referring to FIG. 1, with respect to Example 1 according to the present invention, it may be confirmed that the coating portion containing cobalt was locally formed on the surface of the positive electrode active material.

Referring to FIGS. 2 and 3, with respect to Example 1, it may be confirmed that the coating portion having a phase gradient of a spinel structure of Co₃O₄, a spinel structure of Li_{0.5}CoO₂, and a layered structure of LiCoO₂ was formed in a central direction from the surface of the positive electrode active material. In contrast, with respect to Comparative Example 1 without using the cobalt oxide, it may be confirmed that the coating layer having a layered structure of LiCoO₂ was formed on the surface of the positive electrode active material due to low melting point and high reactivity of Co(OH)₂.

With respect to Comparative Examples 3 and 4 in which a cobalt oxide having an average particle diameter (D₅₀) of 50 nm to 1,000 nm was not used, an appropriate coating portion capable of affecting battery performance was not formed due to a difference in reactivity depending on the particle diameter of the cobalt oxide.

### Experimental Example 2: Confirmation of SEM Images of the Positive Electrode Active Materials

The lithium composite transition metal oxide (composition: LiNi_{0.86}Co_{0.05}Mn_{0.09}O₂; average particle diameter (D₅₀): 4 µm) (manufactured by LG Chem) in the form of a single particle, which was used in the examples and the comparative examples, was photographed using a scanning electron microscope (SEM), and its SEM image is illustrated in FIG. 4.

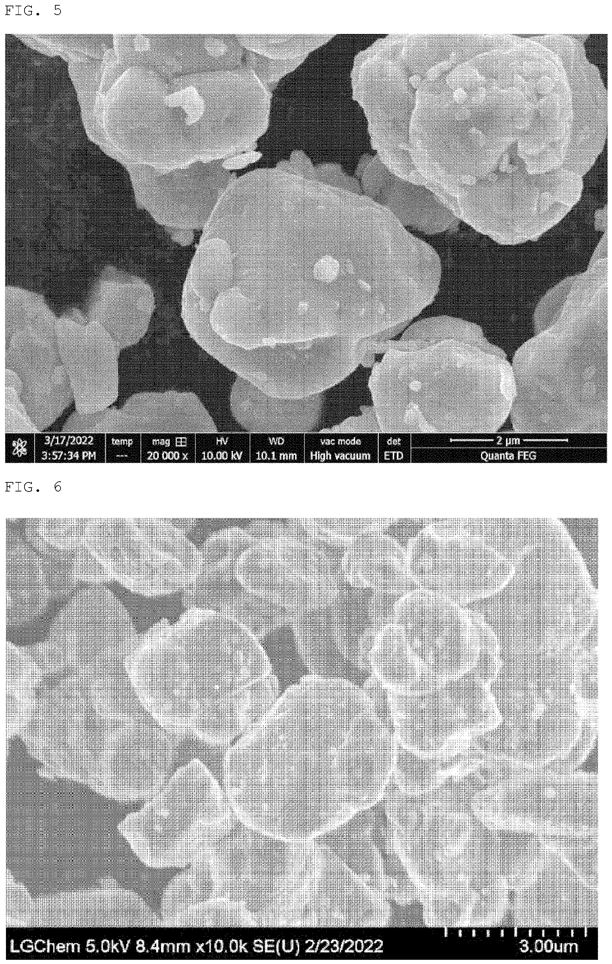

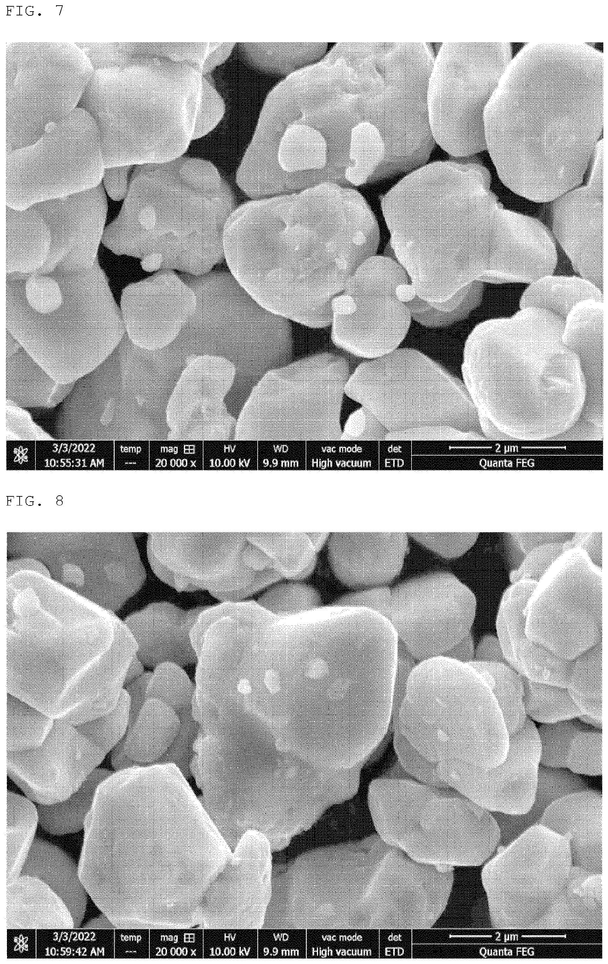

Each of the positive electrode active materials prepared in Examples 1 and 2 and Comparative Examples 1 and 2 was photographed using an SEM, an SEM image of the positive electrode active material of Example 1 is illustrated in FIG. 5, an SEM image of the positive electrode active material of Example 2 is illustrated in FIG. 6, an SEM image of the positive electrode active material of Comparative Example 1 is illustrated in FIG. 7, and an SEM image of the positive electrode active material of Comparative Example 2 is illustrated in FIG. 8.

Referring to FIGS. 4 to 8, it may be confirmed that, with respect to the positive electrode active materials according to the present invention, the coating portion was locally present on the surface of the positive electrode active material while having a dot shape, but, with respect to the positive electrode active materials of Comparative Examples 1 and 2, the coating portion was not locally present on the surface of the positive electrode active material.

### Experimental Example 3: Battery Characteristics Evaluation

Each of the positive electrode active materials prepared in Examples 1 and 2 and Comparative Examples 1 and 2, a carbon black conductive agent, and a polyvinylidene fluoride (PVDF) binder were mixed in an N-methylpyrrolidone (NMP) solvent at a ratio of 96:2:2 to prepare a positive electrode slurry. One surface of an aluminum current collector was coated with the positive electrode slurry, dried at 150°C, and then roll-pressed to prepare a positive electrode.

A lithium metal electrode was used as a negative electrode, an electrode assembly was prepared by disposing a porous polyethylene separator between the positive electrode and the negative electrode, the electrode assembly was disposed in a battery case, and an electrolyte solution was then injected into the case to prepare each half-cell. In this case, the electrolyte solution was prepared by dissolving 1.0 M LiPF₆ in an organic solvent in which ethylene carbonate(EC) :ethyl methyl carbonate(EMC) :diethyl carbonate(DEC) were mixed in a volume ratio of 3:4:3.

Each half-cell thus prepared was charged at 0.1 C to 4.3 V in a constant current-constant voltage (CC-CV) mode at 25°C, and discharged at a constant current of 0.1 C to 3.0 V to measure initial charge capacity and initial discharge capacity and calculate direct current internal resistance (DCIR), and the results thereof are presented in Table 1 below. For reference, a DCIR value is a value calculated by dividing a difference between a voltage at 60 seconds while discharging each half-cell at a constant current of 0.1 C and an initial voltage by an applied current.

**[Table 1]**

| | Initial charge capacity (mAh/g) | Initial discharge capacity (mAh/g) | DCIR (Ω) |
|---|---|---|---|
| Example 1 | 231.5 | 206.5 | 17.1 |
| Example 2 | 231.8 | 206.6 | 16.6 |
| Comparative Example 1 | 231.5 | 206.8 | 19.2 |
| Comparative Example 2 | 231.8 | 206.3 | 18.7 |
| Comparative Example 3 | 231.7 | 206.0 | 19.0 |
| Comparative Example 4 | 230.7 | 205.3 | 16.2 |

Also, while the above-prepared half-cell was stored at 60°C for 12 weeks, a change in volume of the cell was measured every one or two weeks and presented in Table 2 below. Since a gas generation amount was increased if reactivity was increased during high-temperature storage, the change in volume of the cell was large, and thus, if the change in volume of the cell was large, it may be evaluated that high-temperature storage characteristics were degraded.

**[Table 2]**

| | Volume change rate (%) | | | | | | |
|---|---|---|---|---|---|---|---|
| | 1 week | 2 weeks | 4 weeks | 6 weeks | 8 weeks | 10 weeks | 12 weeks |
| Example 1 | 6.7 | 9.6 | 14.1 | 14.8 | 17.6 | 18.9 | 19.6 |
| Example 2 | 5.9 | 8.3 | 12.4 | 13.2 | 15.6 | 16.8 | 16.5 |
| Comparative Example 1 | 6.2 | 10.0 | 17.1 | 20.2 | 23.9 | 27.4 | 27.3 |
| Comparative Example 2 | 4.7 | 7.5 | 13.9 | 16.4 | 20.5 | 23.9 | 25.2 |
| Comparative Example 3 | 8.0 | 11.6 | 16.7 | 17.1 | 19.3 | 21.2 | 23.4 |
| Comparative Example 4 | 6.9 | 10.4 | 15.7 | 16.8 | 18.7 | 20.8 | 22.6 |

As illustrated in Tables 1 and 2, it may be confirmed that the batteries including the positive electrode active materials of Examples 1 and 2 not only had low initial resistance, but also had a small volume change rate during high-temperature storage.

In contrast, it may be confirmed that the batteries including the positive electrode active materials of Comparative Examples 1 and 2, in which the coating layer containing cobalt was present in a layered structure, had a problem in that they not only had high initial resistance, but also had a large gas generation amount due to an increase in side reaction during high-temperature storage because the intercalation of lithium was easy. It may be confirmed that the batteries including the positive electrode active materials of Comparative Examples 3 and 4, in which an appropriate coating portion was not formed, also had a problem of high initial resistance and/or a large gas generation amount.

As a result, it may be understood that the positive electrode active material of the present invention may improve the initial resistance characteristics and storage characteristics of the lithium secondary battery by including the coating portion having a phase gradient on the lithium composite transition metal oxide in the form of a single particle, specifically, the coating portion having a phase gradient from a spinel structure to a layered structure in the central direction from the surface of the positive electrode active material. In addition, according to the method of preparing a positive electrode active material of the present invention, it may be understood that the positive electrode active material according to the present invention may be effectively prepared by using the cobalt oxide having an average particle diameter (D₅₀) of 50 nm to 1,000 nm as a coating material.

## Claims

1. A positive electrode active material comprising a lithium composite transition metal oxide in a form of a single particle; and
a coating portion containing cobalt which is formed on the lithium composite transition metal oxide in the form of a single particle,
wherein the coating portion containing cobalt has a phase gradient from a spinel structure to a layered structure in a central direction from a surface of the positive electrode active material.

2. The positive electrode active material of claim 1, wherein the lithium composite transition metal oxide in the form of a single particle comprises 60 mol% or more of nickel based on a total number of moles of metals excluding lithium.

3. The positive electrode active material of claim 1, wherein the lithium composite transition metal oxide in the form of a single particle has a composition represented by Formula 1:
[Formula 1] Liₓ[Ni_{aC}o_{b}Mn_{c}M1_{d}]O_{2-y}A_{y}
wherein, in Formula 1,
M1 is at least one selected from yttrium (Y), zirconium (Zr), aluminum (Al), boron (B), titanium (Ti), tungsten (W), niobium (Nb), strontium (Sr), molybdenum (Mo), and magnesium (Mg),
A is at least one selected from fluorine (F), chlorine (Cl), bromine (Br), iodine (I), and sulfur (S), and
0.9≤x≤1.2, 0.6≤a<1, 0≤b≤0.4, 0≤c≤0.4, 0≤d≤0.2, a+b+c+d=1, and 0≤y≤0.2.

4. The positive electrode active material of claim 1, wherein the coating portion containing cobalt is locally present on the surface of the positive electrode active material.

5. The positive electrode active material of claim 1, wherein the coating portion containing cobalt sequentially has the phase gradient of the spinel structure of Co₃O₄, the spinel structure of Li_{0.5}CoO₂, and the layered structure of LiCoO₂ in the central direction from the surface of the positive electrode active material.

6. The positive electrode active material of claim 1, wherein the coating portion containing cobalt further comprises aluminum.

7. A method of preparing a positive electrode active material, the method comprising steps of:
preparing a mixture including a lithium composite transition metal oxide in a form of a single particle and a cobalt oxide having an average particle diameter (D₅₀) of 50 nm to 1,000 nm; and
performing a heat treatment on the mixture.

8. The method of claim 7, wherein the mixture comprises the cobalt oxide in an amount such that a ratio (B/A) of the number of moles (B) of cobalt contained in the cobalt oxide to a total number of moles (A) of metals excluding lithium, which are included in the lithium composite transition metal oxide, is in a range of 0.1 to 5.

9. The method of claim 7, wherein the mixture further comprises an aluminum raw material.

10. The method of claim 9, wherein the mixture comprises the aluminum raw material in an amount of 0.01 part by weight to 0.1 part by weight based on 100 parts by weight of the lithium composite transition metal oxide.

11. The method of claim 7, wherein the heat treatment is performed in an oxygen atmosphere.

12. The method of claim 7, wherein the heat treatment is performed at a temperature of 600°C to 800°C.

13. The method of claim 7, wherein the heat treatment is performed for 1 hour to 8 hours.

14. A positive electrode comprising the positive electrode active material of any one of claims 1 to 6.

15. A lithium secondary battery comprising:
the positive electrode of claim 14;
a negative electrode;
a separator disposed between the positive electrode and the negative electrode; and
an electrolyte.
